# EUROPEAN PATENT APPLICATION

(11) **EP 2 228 286 A1**
(43) Date of publication of application: **15.09.2010**
(21) Application number: 10155424.4
(22) Date of filing: 04.03.2010
(51) Int. Cl.: B62D 25/10, F16J 15/02, B60J 10/08

(54) **Air seal for an engine compartment of an agricultural vehicle**

(30) Priority: 05.03.2009 BE 200900132
(71) Applicant: CNH U.K. Limited, Basildon, Essex S14 3AD (GB)
(72) Inventor: Khan, Jibran Ali, London E12 6NS (GB); Perry, Michael John, Colchester Essex C06 1LS (GB)
(74) Representative: Gunst, Wilfried E.D.

(57) **Abstract**

An engine compartment air seal is disclosed for sealing between a hood 12 of an agricultural vehicle and a radiator assembly 10 arranged at the front end of the engine compartment, the air seal 14 serving to prevent air entering the engine compartment from bypassing the radiator assembly. According to the invention, at least part of the seal (14) is moulded in one piece from a high temperature resistant material, preferably EPDM rubber, and is shaped to fit the outline of the radiator assembly 10, the air seal (14) being resiliently compressible to conform to the inner surface of the hood (12, 12').

## Description

### Field of the invention

The invention relates to an engine compartment air seal for an agricultural vehicle, in particular a tractor.

### Background of the invention

In a tractor, there is mounted at the front end of the engine compartment a radiator assembly which comprises a fan, a cowling surrounding the fan and at least one heat exchanger mounted forward of the cowling. Ambient air is drawn by the fan from the front end of the tractor through the heat exchanger to cool liquid in the heat exchanger. Commonly, there may be four such heat exchangers for the engine coolant, charge air cooler, transmission oil cooler and air conditioning system, respectively.

It is important in tractors to optimise engine cooling and to make maximum use of the air entering into the front end of the engine compartment. To this end, it is desirable to establish an air seal around the radiator assembly so that none of the air can bypass the radiator assembly and reach the engine without first flowing past the heat exchanger(s).

In a tractor, the gap between the radiator assembly and the inner surface of the engine compartment cover, herein referred to as the hood, is not uniform. Furthermore, the shape and size of the gap may vary from one tractor variant to another, depending on the styling of the hood. The different parts of the gap may also be exposed to very different temperatures.

The various parts of the gap between the radiator assembly and the hood have hitherto been closed off by different individual seals because of the different requirements that they must meet. One seal, contacting one of the pipes leading to a radiator needed to withstand a temperature in excess of 150°C and was therefore formed of silicone. Another gap was closed off by a neoprene seal, which is less expensive than silicone but adequate for a seal not exposed to high temperatures. Lastly, a foam strip was glued to the inner surface of the hood to allow for differences between style variants of the same tractor.

The prior art approach to sealing around the radiator assembly resulted in several disadvantages. The foam strips glued to the inner surfaces of the hoods are easily damaged if they snag on part of the engine as the hood is being raised and lowered. Furthermore, the time that they require for mounting on a hood often disrupts the automated assembly line and can bring a production line to a standstill.

### Summary of the invention

With a view to mitigating the foregoing disadvantages, the present invention provides an engine compartment air seal for sealing between a hood of an agricultural vehicle and a radiator assembly arranged at the front end of the engine compartment, the air seal serving to prevent air entering the engine compartment from bypassing the radiator assembly, **characterised in that** at least a part of the air seal is moulded in one piece from a high temperature resistant material and is shaped to fit the outline of the radiator assembly, the air seal being resiliently compressible to conform to the inner surface of the hood.

Preferably, the material of the seal is an ethylene propylene diene M-class (EPDM) rubber.

Because of the need for the seal to be compressible, it is advantageous for the EPDM rubber to have a Shore (A) hardness of less that 40 points.

Even with such a compressible material, it is difficult to accommodate the wide variation in the gap between the radiator assembly and the hoods of different style variants. To increase the compressibility of the seal, its surface is preferably formed with a matrix of pockets that penetrate deep into the thickness of the seal leaving only a thin continuous membrane to prevent the passage of air through the seal.

Though the seal may have a total thickness of a few centimetres, the membrane need only have a thickness of 1 to 2 mm.

According to an embodiment of the invention, the pockets are diamond shaped in order to provide an effective compromise between the rigidity of the seal and the compressibility of the seal in a vertical direction.

### Brief Description of the Drawings

The invention will now be described further, by way of example, with reference to the accompanying drawings, in which :
Figure 1 is a schematic vertical section through the front end of a tractor,
Figure 2 is a representative vertical section through the seal of the present invention.

### Detailed Description of the Preferred Embodiment

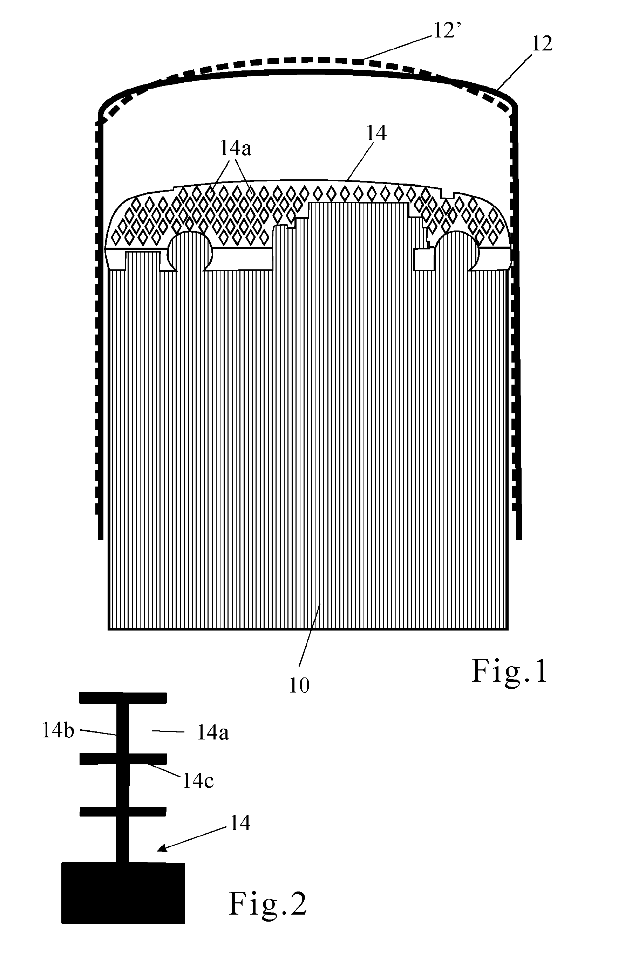

Figure 1 shows the silhouette of a radiator assembly 10 and a hood 12 that covers the engine compartment. Also shown in dotted lines 12' is a hood of an alternative style that may be fitted to the same tractor chassis. An air seal 14 of the present invention is fitted over the radiator assembly 10 to seal the gap between the radiator assembly 10 and the hood 12, when the latter is fully closed.

The radiator assembly 10, which is generally known and therefore not shown in detail, comprises a fan surrounded by a cowling. On the front end of the cowling there are mounted four finned radiator cores which are stacked one in front the other. The cores are for the engine coolant, charge air cooler, transmission oil cooler and air conditioning system, respectively. The pipes entering and leaving the different cores are near the top of the radiator assembly 10 and are represented by the circles in the outline of the radiator assembly 10.

It is important to maximise the cooling, especially of the engine coolant and transmission lubricant. For this reason, all the air entering through a grill at the front end of the hood 12 needs to pass through the radiator assembly 10 and may not be able to bypass the radiator assembly 10 by flowing through any gaps between the radiator assembly 10 and the hood 12.

According to the present invention, a one-piece air seal 14 moulded from EPDM rubber is used to seal the entire gap between the top of the radiator assembly 10 and the hood 12. The air seal 14 may if desired also be extended partly down the sides of the radiator assembly 10 but for the straight parts of the sides of the radiator assembly 10 a lip seal suffices.

The air seal 14 is moulded from EPDM rubber that is capable of withstanding the operating temperature of the hottest of the pipes entering the heat exchanger cores.

The lower part of the air seal 14 is formed of solid EPDM and can be bolted directly in position, having been moulded in the same shape as the silhouette of the radiator assembly 10. The upper part of the air seal 14 needs however to be highly compressible so that the same air seal 14 can be used with hoods of different design, such as the hoods 12 and 12' shown in Figure 1.

To achieve this compressibility, the air seal 14 is formed with diamond shaped pockets 14a that penetrate most of the thickness of the air seal 14 leaving only a membrane 14b (see Figure 2) of about 1mm to 2mm in thickness, which is sufficient to be durable and to prevent air flow through the air seal 14. The walls 14c of the pockets 14b are sufficiently thick for the air seal 14 to be robust but sufficiently resilient to ensure that the top surface of the air seal 14 conforms to the inner surface of the hood 12.

It is clear that alternatives exist for diamond shaped pockets and one could use a honeycomb-like matrix of hexagonal or even circular pockets. The diamond shape is however preferred as it optimises the compressibility of the air seal 34 in a vertical direction.

The air seal 34 of the invention offers the following advantages over the prior art :
- The seal, being a single component, requires only one operation to secure it to the radiator assembly 10, thereby reducing assembly time and cost.
- The air seal 34 can cope with all temperatures in the vicinity of the core of the heat exchanger and thereby avoids the need for more costly high temperature resistant silicone based materials.
- The air seal 34 has sufficient compressibility to allow for variations between different hoods 12, 12', thereby avoiding the need to attach easily torn foam seals to the hoods 12, 12', further simplifying the assembly process.
- Unlike closed cell foams, the EPDM material does not have memory and returns to its original shape even after having been compressed for prolonged periods.

## Claims

1. An engine compartment air seal (14) for sealing between a hood (12, 12') of an agricultural vehicle and a radiator assembly (10) arranged at the front end of the engine compartment, the air seal (14) serving to prevent air entering the engine compartment from bypassing the radiator assembly (10), **characterised in that** at least a part of the air seal (34) is moulded in one piece from a high temperature resistant material and is shaped to fit the outline of the radiator assembly (10), the air seal (14) being resiliently compressible to conform to the inner surface of the hood (12, 12').

2. An engine compartment air seal as claimed in claim 1, **characterised in that** the material of the air seal (14) is an ethylene propylene diene M-class (EPDM) rubber.

3. An engine compartment air seal as claimed in claim 2, **characterised in that** the EPDM rubber has a Shore (A) hardness of less than 40 points.

4. An engine compartment air seal as claimed in claim 3, **characterised in that** the surface of the air seal (14) is formed with a matrix of pockets (14a) that penetrate deep into the thickness of the air seal (14) leaving only a thin continuous membrane (14b) to prevent the passage of air through the air seal (14).

5. An engine compartment air seal as claimed in claim 4, **characterised in that** the membrane (14b) has a thickness of 1 to 2 mm.

6. An engine compartment air seal as claimed in claim 4 or 5, **characterised in that** the pockets (14a) are diamond shaped in order to improve the compressibility of the seal in a vertical direction.
